# EUROPEAN PATENT SPECIFICATION

(11) **EP 1 258 388 B1**
(45) Date of publication and mention of the grant of the patent: **20.12.2006**
(21) Application number: 02008322.6
(22) Date of filing: 11.04.2002
(51) Int. Cl.: B60W 10/06, B60W 10/04, F02D 41/02, B60W 30/18

(54) **Power transmission**
Leistungsgetriebe
Transmission de puissance

(30) Priority: 15.05.2001 JP 2001144370
(43) Date of publication of application: 20.11.2002
(73) Proprietor: HONDA GIKEN KOGYO KABUSHIKI KAISHA, Minato-ku Tokyo (JP)
(72) Inventor: Omatoi, Yasushi, Wako-shi, Saitama (JP); Ohtaki, Mitsuro, Wako-shi, Saitama (JP)
(74) Representative: Prechtel, Jörg

(56) References cited:
- EP-A- 1 048 868
- EP-A- 1 069 346
- RU-C1- 2 082 626
- SU-A1- 1 676 853
- US-A- 4 732 253
- US-A- 6 126 569

## Description

### FIELD OF THE INVENTION

The present invention relates generally to a power transmission that transmits the rotational driving force of an engine.

### BACKGROUND OF THE INVENTION

Many such power transmissions are used, for example, in vehicles as speed change mechanisms. In this case, a transmission incorporated in a vehicle transmits the rotation of the engine with a rotational speed change (by means of speed ratio control). Additionally, the transmission is designed to switch the rotational direction of the output, so that the vehicle is controllable to drive forward or reverse. For the speed ratio control and the forward/reverse switching control, the transmission generally comprises hydraulic clutches, each clutch comprising a clutch cylinder and a clutch piston, which is slidable axially in the clutch cylinder. When a predetermined hydraulic pressure is applied into the clutch cylinder, the clutch piston receiving the pressure pushes clutch plates axially for the engagement action of the clutch.

The hydraulic clutch is supposed to be released when the pressure applied into the clutch cylinder is eliminated. However, in a case where the clutch cylinder is mounted on the input shaft of the transmission, which is rotated all the time by the rotation of the engine while the engine is on, the clutch cylinder receives a pressure generated by the centrifugal force acting on the oil in the clutch cylinder even while the clutch is not engaged. This pressure (hereinafter referred to as centrifugal pressure) acts on the clutch piston, and the clutch piston, in turn, pushes the clutch plates. This condition may lead to the engagement operation of the clutch. To avoid the clutch being actuated by the centrifugal pressure, a hydraulic clutch of prior-art includes a check valve, which closes while the pressure of the clutch cylinder is high but opens when the pressure is low to discharge the oil from the clutch cylinder, or it includes a canceller chamber provided against the clutch piston and opposite to the clutch cylinder, so that the pressure generated in the canceller chamber also by the centrifugal force will act as a counter pressure to cancel the effect of the pressure generated by the centrifugal pressure in the clutch cylinder.

However, as such a measure requires provision of a check valve or a canceller camber, it makes the construction of the power transmission complicated and leads to an increase of production cost.

US-A-6 126 569 discloses a power transmission for transmitting rotational driving force from an engine, comprising: a clutch capable of discontinuing transmission of power, which is executed through said power transmission; and rotation-restricting means which restricts maximum rotational speed of said engine while said hydraulic clutch is released.

EP-A-1 048 868 and US-A-4 732 253 each show hydraulic clutches with specific designs cancelling centrifugal pressure, but without restricting the rotational speed of the engine.

### SUMMARY OF THE INVENTION

It is an object of the present invention to eliminate the adverse effect of the centrifugal pressure on the hydraulic cylinder without providing a device or a mechanism to directly prevent such a problem.

According to a feature of the present invention, a power transmission for transmitting the rotational driving force of an engine is provided, comprising a hydraulic clutch capable of discontinuing transmission of power, which is executed through said power transmission; and rotation-restricting means which controls output of said engine by reducing supply of engine fuel and restricts maximum rotational speed of said engine below the rotational speed at which centrifugal pressure of hydraulic oil starts to engage said hydraulic clutch while said hydraulic clutch is released and no power is transmitted through said power transmission.

Further, there is provided a power transmission for transmitting rotational driving force from an engine, comprising a hydraulic clutch and rotation-restricting means which controls output of said engine by reducing supply of engine fuel and restricts maximum rotational speed of said engine below the rotational speed at which centrifugal pressure of hydraulic oil starts to engage said hydraulic clutch while said hydraulic clutch is released and no power is transmitted through said power transmission, wherein said power transmission comprises a forward power transfer path which transmits the rotational driving force of said engine to said power transmission as forward drive rotation and a reverse power transfer path which transmits the rotational driving force of said engine to said power transmission as reverse drive rotation; and said forward power transfer path or said reverse power transfer path is selected according to engaging and disengaging said hydraulic clutch.

For example, a starting clutch provided between the output shaft of the engine and the input shaft of the transmission is a hydraulic clutch that constitutes such a power transmission. While the hydraulic clutch is engaged for transmission of power, the rotation of the engine, which changes in response to the accelerator being manipulated by the driver, is not restricted and directly transmitted to the transmission. On the other hand, after the hydraulic clutch is released so that the transmission is set in a neutral condition, the rotation-restricting means restricts the maximum rotational speed of the engine, leading to the restriction of the rotational speed of the hydraulic clutch. As a result, the centrifugal pressure generated in the clutch cylinder chamber of the hydraulic clutch is controlled not to become so high as to bring the hydraulic clutch into engagement.

According to another feature of the present invention, a power transmission for transmitting the rotational driving force of an engine (for example, the assembly composed of the transmission input shaft, the forward/reverse switching mechanism, the metal V-belt mechanism, the transmission countershaft, the starting clutch and the power transmission gear trains, which are described in the following preferred embodiment) comprises a forward power transfer pass which transmits the rotational driving force of the engine as forward drive rotation (for example, the power transfer pass established by the forward clutch of the forward/reverse switching mechanism described in the following embodiment), a reverse power transfer pass which transmits the rotational driving force of the engine as reverse drive rotation (for example, the power transfer path established by the reverse brake of the forward/reverse switching mechanism in the following embodiment) and a hydraulic clutch for being used for selecting the forward power transfer path (for example, the forward clutch in the following embodiment). This power transmission additionally comprises rotation-restricting means (for example, the engine-output controller described in the following embodiment) which restricts the maximum rotational speed of the engine while the hydraulic clutch is released and no power is transmitted through the forward power transfer pass.

With this power transmission, while the hydraulic clutch is engaged for establishing the forward power transfer path, the rotation of the engine, which changes in response to the accelerator being manipulated by the driver, is not restricted and transmitted through the power transmission to drive wheels as forward drive rotation. On the other hand, if the hydraulic clutch is disengaged to set the transmission in a neutral condition, or if the reverse power transfer path is selectively established, the rotation-restricting means restricts the maximum rotational speed of the engine, thereby also restricting the rotational speed of the hydraulic clutch. As a result, the centrifugal pressure generated in the clutch cylinder chamber of the hydraulic clutch is restricted to prevent the hydraulic clutch from being brought into engagement by the centrifugal pressure. In the neutral condition, as the rotation of the engine is not transmitted to the drive wheels, the restriction of the rotation of the engine presents no problem or disadvantage. Also in reverse drive, as the vehicle is not driven at a high speed, the restriction of the rotation of the engine presents no problem or disadvantage, but rather, brings about a preferable effect of quietness.

It is preferable that the power transmission be arranged such that the reverse power transfer path is selectively established by a hydraulic brake. In this case, the hydraulic brake comprises a piston which is provided in a brake-cylinder chamber formed in a transmission housing and frictionally engaging members which are engageable with said transmission housing by a pushing force provided by the piston. The reverse power transfer path is selectively established when the piston receiving a hydraulic pressure being supplied into the brake-cylinder chamber pushes and engages the frictionally engaging member. The brake-cylinder chamber of the hydraulic brake constructed in this manner is fixed stationary, and it never rotates. As a result, no centrifugal pressure is generated in the hydraulic brake. Therefore, it is not necessary to restrict the rotation of the engine while the hydraulic clutch is engaged for establishing the forward power transfer path.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only and thus are not limitative of the present invention.
FIG. 1 is a sectional view of a belt-type continuously variable transmission, which constitutes a power transmission according to the present invention.
FIG. 2 is a schematic diagram showing the power transmission paths of this continuously variable transmission.
FIG. 3 is a sectional view of a forward/reverse switching mechanism, which constitutes the continuously variable transmission.
FIG. 4 is a sectional view of a starting clutch, which constitutes the continuously variable transmission.
FIG. 5 is a graph which shows a relation between the rotational speed of the engine and the centrifugal pressure.

### DESCRIPTION OF THE PREFERRED EMBODIMENTS

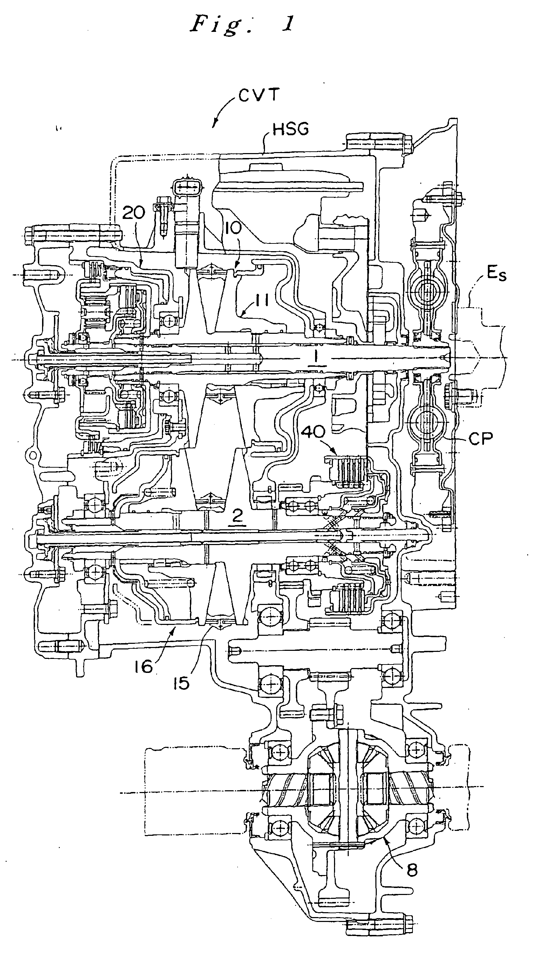

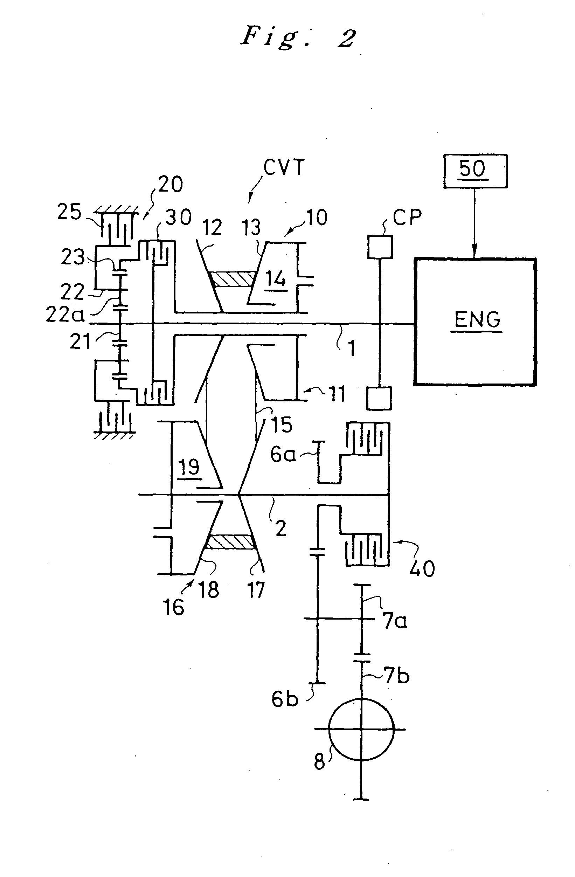

A preferred embodiment according to the present invention will be described in reference to the drawings. FIGS. 1 and 2 show a belt-type continuously variable transmission CVT, which embodies a power transmission according to the present invention. This belt-type continuously variable transmission CVT comprises an input shaft 1, a countershaft 2, a metal V-belt mechanism 10, a planetary gear type forward/reverse switching mechanism 20, a starting clutch mechanism 40, power transmission gear trains 6a, 6b, 7a and 7b, and a differential mechanism 8 in a transmission housing HSG. The input shaft 1 of the transmission is connected through a coupling mechanism CP to the output shaft Es of the engine ENG. The metal V-belt mechanism 10 connects rotationally the input shaft 1 and the countershaft 2, which is provided parallel with the input shaft 1. The forward/reverse switching mechanism 20 is disposed over the input shaft 1, and the starting clutch mechanism 40 is disposed on the countershaft 2.

The metal V-belt mechanism 10 comprises a drive pulley 11, which is disposed over the input shaft 1, a driven pulley 16, which is disposed on the countershaft 2, and a metal V-belt 15, which is disposed around these pulleys 11 and 16. The drive pulley 11 comprises a stationary pulley half 12, which is disposed rotatably on the input shaft 1, and a movable pulley half 13, which rotates with stationary pulley half 12 and, at the same time, movable with respect to the stationary pulley half 12 in the axial direction of the pulley 11. The axial shift of the movable pulley half 13 is executed by the pressure supplied into a drive-pulley cylinder chamber 14 provided to the drive pulley 11. On the other hand, the driven pulley 16 comprises a stationary pulley half 17, which is fixed on the countershaft 2, and a movable pulley half 18, which rotates with the stationary pulley half 17 and movable with respect to the stationary pulley half 17 in the axial direction of the pulley. The axial shift of the movable pulley half 18 is executed by the pressure supplied into a driven-pulley cylinder chamber 19 provided to the driven pulley 16.

In this construction, the hydraulic pressures supplied into these cylinder chambers 14 and 19, respectively, are controlled to generate appropriate thrusts that act on the movable pulley halves 13 and 18 and vary appropriately the widths of the drive and driven pulleys 11 and 16. This pressure control enables the pitch radii of the respective pulleys 11 and 16 for the V belt 15 to change continuously, and thus the speed change ratio of the transmission is variable continuously.

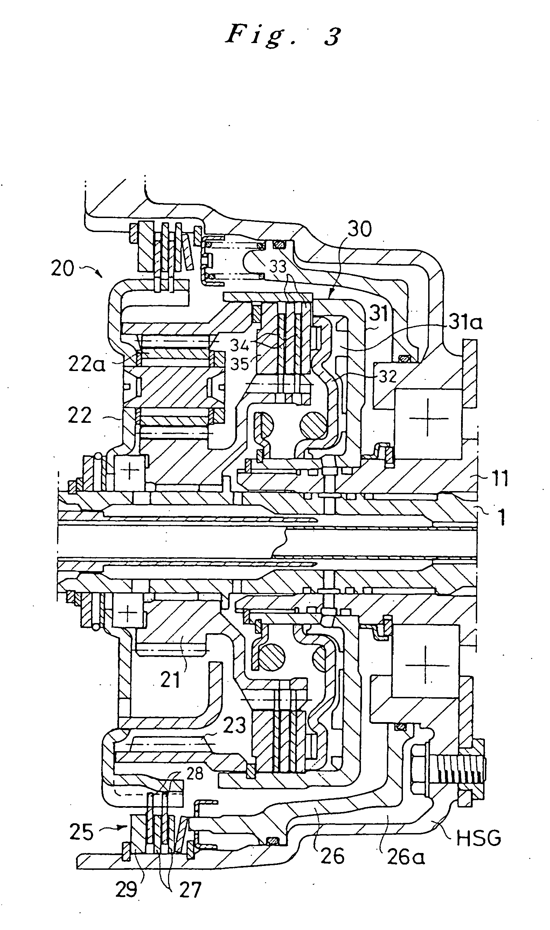

FIG. 3 shows the details of the forward/reverse switching mechanism 20. The mechanism 20 is a planetary gear train, which comprises a sun gear 21, a carrier 22 and a ring gear 23. The sun gear 21 is connected to the input shaft 1, and the carrier 22 is rotatable coaxially with the sun gear 21 and retains rotatably a plurality of pinions 22a, which mesh with the sun gear 21. The ring gear 23 is also rotatable coaxially with the sun gear 21 and meshes with the pinions 22a. In addition, the forward/reverse switching mechanism 20 includes a reverse brake 25, which can hold the carrier 22 stationary, and a forward clutch 30, which engages and disengages the sun gear 21 to and from the ring gear 23.

In this arrangement, when the forward clutch 30 is actuated for engagement while the reverse brake 25 is not engaged, the sun gear 21 and the ring gear 23 are connected with each other. In this condition, the sun gear 21, the carrier 22 and the ring gear 23 are all rotatable in unison with the input shaft 1, and the drive pulley 11 is rotatable in the same direction as the input shaft 1 (forward drive direction). On the other hand, when the forward clutch 30 is released and the reverse brake 25 is actuated for engagement, the carrier 22 is held stationary. In this condition, the ring gear 23 is rotatable in the direction opposite to that of the sun gear 21, so the drive pulley 11 is now also rotatable in the direction opposite to that of the input shaft 1 (reverse drive direction).

In the forward/reverse switching mechanism 20, the reverse brake 25 comprises a brake piston 26, separator plates 27, clutch plates 28 and an end plate 29. The brake piston 26 is provided axially slidable in a brake cylinder 26a formed in the transmission housing HSG, and the separator plates 27, the clutch plates 28 and the end plate 29 are placed against a front end of the brake piston 26 with the separator plates 27 and the clutch plates 28 being alternately arranged in the axial direction. While the separator plates 27 are engaged to the transmission housing HSG and are axially slidable, the clutch plates 28 are engaged to the carrier 22 and are axially slidable. In this reverse brake 25, when a predetermined pressure is applied into the brake cylinder 26a, the brake piston 26 receiving this pressure pushes the separator plates 27 and the clutch plates 28 onto the end plate 29. The friction generated between the plates 27 and 28 acts to combine these components as if they were a one-piece body, so the carrier 22 is held stationary.

On the other hand, the forward clutch 30 comprises a forward clutch cylinder 31, a forward clutch piston 32, separator plates 33, clutch plates 34 and an end plate 35. The forward clutch cylinder 31 is combined to the drive pulley 11, and the forward clutch piston 32 is provided axially slidable in a forward clutch cylinder chamber 31a formed in the forward clutch cylinder 31. The separator plates 33, the clutch plates 34 and the end plate 35 are placed against a front end of the forward clutch piston 32 with the separator plates 33 and the clutch plates 34 being alternately arranged in the axial direction. While the separator plates 33 are engaged to the forward clutch cylinder 31 and are axially slidable, the clutch plates 34 are engaged to the sun gear 21 and are axially slidable. The end plate 35 is connected to the forward clutch cylinder 31, which rotates with the ring gear 23 in unison.

In the forward clutch 30, when a predetermined pressure is applied into the forward clutch cylinder chamber 31a, the forward clutch piston 32 receiving this pressure pushes the separator plates 33 and the clutch plates 34 onto the end plate 35. The friction generated between the plates 33 and 34 acts to combine these components as if they were a one-piece body. As a result, the sun gear 21 and the carrier 22 are combined with each other.

With this construction, the rotation of the input shaft 1 of the transmission is switched by the forward/reverse switching mechanism 20 and transmitted to the drive pulley 11 either in the forward drive or reverse drive direction. The speed of this rotation is varied continuously by the metal V-belt mechanism 10 and is transmitted to the countershaft 2. Then, the starting clutch 40, which is mounted on the countershaft 2, controls the transmission of power to wheels (i.e., to the power transmission gear trains 6a, 6b, 7a and 7b and to the differential mechanism 8).

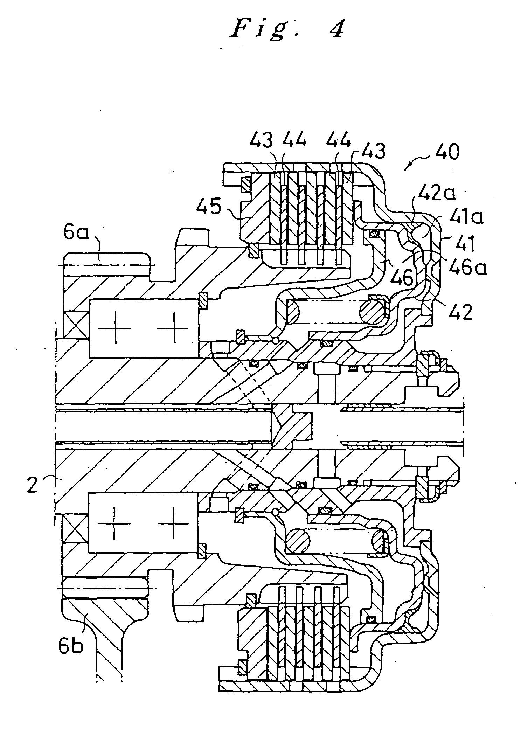

FIG. 4 shows the details of the starting clutch 40, which comprises a starting clutch cylinder 41, a starting clutch piston 42, separator plates 43, clutch plates 44 and an end plate 45. The starting clutch cylinder 41 is fixed to the countershaft 2, and the starting clutch piston 42 is provided axially slidable in a starting clutch cylinder chamber 41a formed in the starting clutch cylinder 41. The separator plates 43, the clutch plates 44 and the end plate 45 are placed against a front end of the starting clutch piston 42 with the separator plates 43 and the clutch plates 44 being alternately arranged in the axial direction. While the separator plates 43 are engaged to the starting clutch cylinder 41 and are axially slidable, the clutch plates 44 are engaged to the power transmission gear 6a and are axially slidable. The end plate 45 is connected to the starting clutch cylinder 41. Furthermore, an oil-sealing member 42a is combined (bonded) to the starting clutch piston 42 as a one-piece body with a compact width.

In the starting clutch 40, when a predetermined pressure is applied into the starting clutch cylinder chamber 41a, the starting clutch piston 42 receiving this pressure pushes the separator plates 43 and the clutch plates 44 onto the end plate 45. The friction generated between the plates 43 and 44 acts to combine these components. This engaging force depends on the pressure supplied into the starting clutch cylinder chamber 41a, so the transmission of the rotational driving force of the engine to the power transmission gear 6a is adjustable appropriately by controlling the pressure being supplied.

The rotational driving force transmitted through the starting clutch 40 to the power transmission gear 6a is then transmitted through the power transmission gear trains 6a, 6b, 7a and 7b, which includes the power transmission gear 6a, to the differential mechanism 8 and to the right and left drive wheels (not shown). With this arrangement, the rotational driving force transmitted to the wheels is controllable by controlling the engagement operation of the starting clutch 40, for example, in the startup control of the vehicle.

Furthermore, the belt-type continuously variable transmission CVT constructed as described above comprises an engine-output controller 50 for controlling the output of the engine ENG while the forward clutch 30, which constitutes the forward/reverse switching mechanism 20, is not engaged. The engine-output controller 50, for example, reduces the supply of engine fuel so that the rotational speed of the output shaft Es of the engine, i.e., the rotational speed of the input shaft 1 of the transmission, will not exceed a predetermined value under a predetermined condition. The following is the description of the function of the engine-output controller 50.

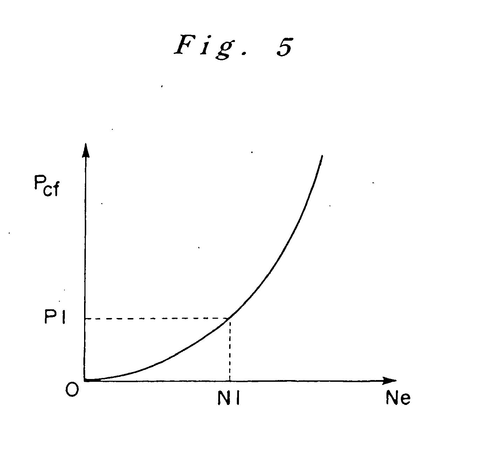

As described previously, when the reverse brake 25 of the forward/reverse switching mechanism 20 is engaged, the rotation of the engine is transmitted from the sun gear 21 to the ring gear 23. As a result, the drive pulley 11 is driven in the reverse drive direction. In this condition, the forward clutch cylinder 31 of the forward clutch 30 is rotating together with the drive pulley 11, so a centrifugal pressure is generated in the forward clutch cylinder chamber 31a from this rotation. As shown in FIG. 5, this centrifugal pressure increases as the rotational speed Ne of the engine increases, with the square of the rotational speed Ne. It is clear from this that the centrifugal pressure increases rapidly as the rotational speed Ne becomes higher and higher. This centrifugal pressure acts on the forward clutch piston 32 as a pushing force, so the forward clutch 30 is loosely engaged. In other words, while the reverse brake 25 is engaged, the forward clutch 30 is also engaged though loosely. This means that the separator plates 33 and the clutch plates 34 are in relative rotation with a friction between them. This presents a problem of transmission loss because some power is lost as heat.

To avoid this, if the rotational speed Ne of the engine becomes relatively high while the forward clutch 30 is not engaged, the engine-output controller 50 reduces the supply of fuel such that the rotational speed Ne will not become higher than a predetermined rotational speed N1. As the rotational speed Ne is maintained below the predetermined rotational speed N1 in this way, the centrifugal pressure Pcf is controlled in a range lower than a predetermined pressure P1. As a result, the forward clutch 30 remains free while the reverse brake 25 is engaged. For example, even if the accelerator pedal is pressed down in this condition, the rotation of the engine never becomes higher than the predetermined rotational speed N1. Therefore, the engine-output controller 50 eliminates the above described problem of the forward clutch 30 being loosely engaged from the centrifugal pressure.

Furthermore, while the starting clutch 40 is not engaged, a similar problem is observable if the reverse brake 25 is engaged while the forward clutch 30 is not engaged. Therefore, also for this condition, the engine-output controller 50 maintains the rotational speed Ne of the engine lower than the predetermined rotational speed N1. In other words, the engine-output controller 50 controls to keep the rotational speed Ne lower than the predetermined rotational speed N1 while the forward clutch 30 is not engaged.

Also, a similar problem can occur to the starting clutch 40, itself. To eliminate such possibility, while the starting clutch 40 is not engaged, the rotation of the engine may be controlled in the same way as the above described way. However, to solve this problem, the present invention provides a canceller chamber 46a inside the starting clutch piston 42 of the starting clutch 40, which chamber is sealed with a lid member 46 and filled with hydraulic oil. With this arrangement, when the starting clutch 40 rotates, the centrifugal pressure produced in the starting clutch cylinder chamber 41a acts to push the starting clutch piston 42 axially leftward in FIG. 4, and the centrifugal pressure produced in the canceller chamber 46a acts to push it axially rightward to cancel out the effect of the centrifugal pressure produced in the starting clutch cylinder chamber 41a. With this arrangement, there is no possibility of the starting clutch 40 engaging loosely when it should be free.

There is a power transmission which includes a starting clutch comprising a hydraulic clutch between the output shaft of the engine and the input shaft of the transmission. In such a transmission, when the starting clutch is released to disconnect the transmission of power from the engine to the transmission, the engine-output controller functions to control the maximum rotational speed of the engine. However, while the starting clutch is engaged for transmission of power, the engine-output controller will not restrict the rotation of the engine. The rotation of the engine, which changes in response to the accelerator being manipulated by the driver, is directly transmitted to the transmission. On the other hand, while the hydraulic clutch is not engaged, and the transmission is in a neutral condition, the engine-output controller restricts the maximum rotational speed of the engine. Because the rotation of the starting clutch is restricted in this way, the centrifugal pressure is controlled not to become so high as to bring the starting clutch into engagement.

As explained above, according to the present invention, rotation-restricting means is provided to restrict the maximum rotational speed of the engine while the hydraulic clutch that sets selectively a forward drive power transmission path is not engaged, i.e., while the power transmission path is disconnected. When the hydraulic clutch is released to establish a neutral condition or when a reverse drive power transmission path is selected, the rotation-restricting means restricts the maximum rotational speed of the engine so as to restrict the rotation of the hydraulic clutch. In this way, the centrifugal pressure being generated in the clutch cylinder chamber of the hydraulic clutch is controlled not to grow so high as to bring the hydraulic clutch into engagement. On the other hand, while the starting clutch is engaged for establishing a forward drive power transmission path, the rotation of the engine is not restricted. The rotation of the engine, which changes in response to the accelerator being manipulated by the driver, is transmitted through the power transmission to the drive wheels as forward drive rotation. As a result, the vehicle is driven at the speed which corresponds to the operation of the accelerator.

According to another feature of the present invention, rotation-restricting means is provided for a power transmission whose starting clutch comprises a hydraulic clutch which is provided between the output shaft of the engine and the input shaft of the transmission, the hydraulic clutch being capable of discontinuing the transmission of power from the engine to the input shaft of the power transmission. In this arrangement, the rotation-restricting means restricts the maximum rotational speed of the engine while the hydraulic clutch is not engaged, and no power is transmitted from the engine to the power transmission.

With this arrangement, while the transmission of power is carried out with the hydraulic clutch being engaged, the rotation of the engine is not restricted. The rotation of the engine, which changes in response to the accelerator being manipulated by the driver, is transmitted directly to the power transmission. On the other hand, while the hydraulic clutch is released, and a neutral condition is established, the rotation-restricting means restricts the maximum rotational speed of the engine. In this condition, the rotation of the hydraulic clutch is restricted to minimize the centrifugal pressure generated in the clutch cylinder chamber of the hydraulic clutch, thereby preventing the above mentioned problem of the hydraulic clutch being actuated for engagement by the centrifugal pressure.

The invention being thus described, it will be obvious that the same may be varied in many ways. Such variations are not to be regarded as a departure from the scope of the invention as defined by the following claims.

## Claims

1. A power transmission for transmitting rotational driving force from an engine, comprising:
a hydraulic clutch(40) capable of discontinuing transmission of power, which is executed through said power transmission; and
rotation-restricting means (50) which controls output of said engine by reducing supply of engine fuel and restricts maximum rotational speed of said engine below the rotational speed at which centrifugal pressure of hydraulic oil starts to engage said hydraulic clutch (40) while said hydraulic clutch (40) is released and no power is transmitted through said power transmission.

2. The power transmission as set forth in claim 1, wherein said hydraulic clutch comprises a starting clutch provided at an input shaft of said power transmission, said starting clutch being used for controlling transmission of the rotational driving force of said engine.

3. A power transmission for transmitting rotational driving force from an engine, comprising:
a hydraulic clutch (30); and
rotation-restricting means (50) which controls output of said engine by reducing supply of engine fuel and restricts maximum rotational speed of said engine below the rotational speed at which centrifugal pressure of hydraulic oil starts to engage said hydraulic clutch (30) while said hydraulic clutch (30) is released and no power is transmitted through said power transmission, wherein:
said power transmission comprises a forward power transfer path (30, 20) which transmits the rotational driving force of said engine to said power transmission as forward drive rotation and a reverse power transfer path (25, 20) which transmits the rotational driving force of said engine to said power transmission as reverse drive rotation; and
said forward power transfer path (30, 20) or said reverse power transfer path (25, 20) is selected according to engaging and disengaging said hydraulic clutch (30).

4. The power transmission as set forth in claim 3, further comprising a hydraulic brake (25); wherein:
said hydraulic brake (25) comprises a piston (26) which is provided in brake-cylinder chamber formed in a transmission housing (HSG) and frictionally engaging members (27, 28) which are engageable with said transmission housing (HSG) by a pushing force provided by said piston (26); and
when said piston (26) receives a hydraulic pressure being supplied into said brake-cylinder chamber, said piston (26) pushes and engages said frictionally engaging members (27, 28) with said transmission housing (HSG) to selectively establish said reverse power transfer pass (25, 20).

5. The power transmission as set forth in claim 4, further comprising a continuously variable speed change mechanism (CVT) which varies output rotational speed continuously, wherein said hydraulic clutch (30) and said hydraulic brake (25) are provided at an input part of said power transmission.

6. The power transmission as set forth in claim 4, wherein:
said forward power transfer path (30, 20) and said reverse power transfer path (20, 25) comprise a planetary gear mechanism (20) which consists of a sun gear element (21), a carrier element (22) and a ring gear element (23);
said hydraulic clutch (30) is controlled for engaging and disengaging two elements out of said sun gear element (21), said carrier element (22) and said ring gear element (23); and
said hydraulic brake (25) is controlled for holding or fixing the other element out of said sun gear element (21), said carrier element (22) and said ring gear element (23).

## Patentansprüche

1. Kraftübertragung zur Übertragung der drehenden Antriebskraft von einem Motor umfassend:
eine Hydraulikkupplung (40), die in der Lage ist, die Übertragung von Kraft, die durch die Kraftübertragung ausgeführt wird, zu unterbrechen; und
ein Drehungsbegrenzungsmittel (50), das die Leistung des Motors steuert/regelt, in dem es die Zufuhr von Motorkraftstoff reduziert, und das die maximale Drehzahl des Motors unter die Drehzahl begrenzt, bei der der Zentrifugaldruck des Hydrauliköls beginnt, die Hydraulikkupplung (40) einzurücken, während die Hydraulikkupplung (40) gelöst ist und durch die Kraftübertragung keine Kraft übertragen wird.

2. Kraftübertragung nach Anspruch 1, worin die Hydraulikkupplung eine Anfahrkupplung aufweist, die an einer Eingangswelle der Kraftübertragung vorgesehen ist, wobei die Anfahrkupplung verwendet wird, die Übertragung der drehenden Antriebskraft des Motors zu steuern/zu regeln.

3. Kraftübertragung zur Übertragung der drehenden Antriebskraft von einem Motor, umfassend:
eine Hydraulikkupplung (30); und
ein Drehungsbegrenzungsmittel (50), das die Leistung des Motors steuert/regelt, in dem es die Zufuhr von Motorkraftstoff reduziert, und
das die maximale Drehzahl des Motors unter die Drehzahl begrenzt, bei der der Zentrifugaldruck des Hydrauliköls beginnt, die Hydraulikkupplung (30) einzurücken, während die Hydraulikkupplung (30) gelöst ist und durch die Kraftübertragung keine Kraft übertragen wird, worin:
die Kraftübertragung einen Vorwärtskraftübertragungsweg (30, 20), der die drehende Antriebskraft des Motors auf die Kraftübertragung als Vorwärtsantriebsdrehung überträgt, und einen Rückwärtskraftübertragungsweg (25, 20), der die drehende Antriebskraft des Motors auf die Kraftübertragung als Rückwärtsantriebsdrehung überträgt, aufweist; und
wobei der Vorwärtskraftübertragungsweg (30, 20) oder der Rückwärtskraftübertragungsweg (25, 20) gemäß dem Einrücken und Ausrücken der Hydraulikkupplung (30) gewählt wird.

4. Kraftübertragung nach Anspruch 3, die ferner eine Hydraulikbremse (25) umfasst, worin:
die Hydraulikbremse (25) einen Kolben (26), der in einer in einem Getriebegehäuse (HSG) ausgebildeten Bremszylinderkammer vorgesehen ist, und Reibeingriffselemente (27, 28), die durch eine vom Kolben (26) erzeugte Schubkraft mit dem Getriebegehäuse (HSG) in Eingriff bringbar sind, aufweist; und
wenn der Kolben (26) einen Hydraulikdruck, der der Bremszylinderkammer zugeführt wird, erhält, der Kolben (26) auf die Reibeingriffselemente (27, 28) drückt und diese mit dem Getriebegehäuse (HSG) in Eingriff bringt, um selektiv den Rückwärtskraftübertragungsweg (25, 20) herzustellen.

5. Kraftübertragung nach Anspruch 4, die ferner einen stufenlos verstellbaren Gangänderungsmechanismus (CVT) aufweist, der die Ausgangsdrehzahl stufenlos verändert, worin die Hydraulikkupplung (30) und die Hydraulikbremse (25) an einem Eingangsteil der Kraftübertragung vorgesehen sind.

6. Kraftübertragung nach Anspruch 4, worin der Vorwärtskraftübertragungsweg (30, 20) und der Rückwärtskraftübertragungsweg (25, 20) einen Planetengetriebemechanismus (20) aufweist, der aus einem Sonnenradelement (21), einem Trägerelement (22) und einem Ringradelement (23) besteht;
wobei die Hydraulikkupplung (30) angesteuert wird, um zwei Elemente des Sonnenradelements (21) des Trägerelements (22) und des Ringradelements (23) in Eingriff zu bringen und zu lösen; und
die Hydraulikbremse (25) angesteuert wird, um das andere Element von Sonnenradelement (21), Trägerelement (22) und Ringradelement (23) zu halten oder zu fixieren.

## Revendications

1. Transmission de puissance destinée à transmettre une force d'entraînement rotative à partir d'un moteur, comprenant :
un embrayage hydraulique (40) pouvant interrompre la transmission de puissance qui est réalisée par le biais de ladite transmission de puissance ; et
un moyen de limitation de la rotation (50) qui commande la sortie dudit moteur en réduisant l'approvisionnement de carburant du moteur et limite la vitesse de rotation maximale dudit moteur en dessous de la vitesse de rotation à laquelle la pression centrifuge de l'huile hydraulique commence à engager ledit embrayage hydraulique (40) tandis que ledit embrayage hydraulique (40) est relâché et qu'aucune puissance n'est transmise par le biais de ladite transmission de puissance.

2. Transmission de puissance selon la revendication 1, **caractérisée en ce que** ledit embrayage hydraulique comprend un embrayage de démarrage prévu sur un arbre d'entrée de ladite transmission de puissance, ledit embrayage de démarrage étant utilisé pour commander la transmission de la force d'entraînement rotative dudit moteur.

3. Transmission de puissance destinée à transmettre une force d'entraînement rotative à partir d'un moteur, comprenant :
un embrayage hydraulique (30) ; et
un moyen de limitation de la rotation (50) qui commande la sortie dudit moteur en réduisant l'approvisionnement de carburant du moteur et limite la vitesse de rotation maximale dudit moteur en dessous de la vitesse de rotation à laquelle la pression centrifuge de l'huile hydraulique commence à engager ledit embrayage hydraulique (30) tandis que ledit embrayage hydraulique (30) est relâché et qu'aucune puissance n'est transmise par le biais de ladite transmission de puissance ; **caractérisée en ce que** :
ladite transmission de puissance comprend une chaîne de transmission de puissance avant (30, 20), qui transmet la force d'entraînement rotative dudit moteur à ladite transmission de puissance en tant que rotation d'entraînement avant, et une chaîne de transmission de puissance arrière (25, 20), qui transmet la force d'entraînement rotative dudit moteur à ladite transmission de puissance en tant que rotation d'entraînement arrière ; et
ladite chaîne de transmission de puissance avant (30, 20) ou ladite chaîne de transmission de puissance arrière (25, 20) est sélectionnée en fonction de l'engagement et du désengagement dudit embrayage hydraulique (30).

4. Transmission de puissance selon la revendication 3, comprenant en outre un frein hydraulique (25), dans laquelle :
ledit frein hydraulique (25) comprend un piston (26) qui est prévu dans un carter de cylindre de frein formé dans un logement de transmission (HSG) et engage par friction des éléments (27, 28) qui peuvent être engagés avec ledit logement de transmission (HSG) par une force de compression assurée par ledit piston (26) ; et
lorsque ledit piston (26) reçoit une pression hydraulique fournie dans ledit carter de cylindre de frein, ledit piston (26) comprime et engage lesdits éléments s'engageant par friction (27, 28) avec ledit logement de transmission (HSG) afin d'établir de façon sélective ladite chaîne de transmission de puissance arrière (25, 20).

5. Transmission de puissance selon la revendication 4, comprenant en outre un mécanisme de changement de vitesse à variation continue (CVT) qui modifie en permanence la vitesse de rotation de sortie, **caractérisée en ce que** ledit embrayage hydraulique (30) et ledit frein hydraulique (25) sont prévus dans une zone d'entrée de ladite transmission de puissance.

6. Transmission de puissance selon la revendication 4, **caractérisée en ce que** :
ladite chaîne de transmission de puissance avant (30, 20) et ladite chaîne de transmission de puissance> arrière (20, 25) comprennent un mécanisme d'engrenage planétaire (20) qui se compose d'un élément planétaire (21), d'un élément de support (22) et d'un élément de couronne dentée (23) ;
ledit embrayage hydraulique (30) est commandé pour engager et désengager deux éléments en dehors dudit élément planétaire (21), dudit élément de support (22) et dudit élément de couronne dentée (23) ; et
ledit frein hydraulique (25) est commandé pour retenir ou fixer l'autre élément en dehors dudit élément planétaire (21), dudit élément de support (22) et dudit élément de couronne dentée (23).
